# EUROPÄISCHE PATENTANMELDUNG

(11) **EP 3 794 931 A1**
(43) Veröffentlichungstag der Anmeldung: **24.03.2021**
(21) Anmeldenummer: 20186181.2
(22) Anmeldetag: 16.07.2020
(51) Int. Cl.: A01D 57/02, A01D 69/03, F16H 61/431

(54) **HASPELANTRIEB EINES VORSATZGERÄTES**

(30) Priorität: 23.09.2019 DE 102019125507
(71) Anmelder: CLAAS Selbstfahrende Erntemaschinen GmbH, 33428 Harsewinkel (DE)
(72) Erfinder: Kühn, Michael, 48361 Beelen (DE)
(74) Vertreter: CLAAS Gruppe

(57) **Zusammenfassung**

Die Erfindung betrifft ein als Getreideschneidwerk ausgeführtes Vorsatzgerät 3 zumindest eine Haspel 9 und einen hydraulischen Haspelantrieb 14, wobei der hydraulische Haspelantrieb 14 zumindest von einer in einem offenen Hydraulikkreislauf 16 betriebenen Motoreinheit 15 gebildet wird und wobei dem Hydraulikkreislauf 16 zumindest ein Stromregelventil 20 zur Drehzahlregelung der Haspel 9 zugeordnet ist und die Motoreinheit 15 von einer Konstantstrompumpe 18 mit Druckmedium 19 versorgt wird und das Stromregelventil 20 der Motoreinheit 15 in einer Bypass-Schaltung 21 zugeordnet ist.

## Beschreibung

Die Erfindung betrifft ein als Getreideschneidwerk ausgeführtes Vorsatzgerät zumindest eine Haspel und einen hydraulischen Haspelantrieb umfassend nach dem Oberbegriff des Anspruchs 1.

Aus der DE 37 085 50 ist ein derartiger Haspelantrieb bekannt geworden, bei welchem der Hydraulikmotor zum Antrieb der Haspel in einen offenen Hydraulikkreislauf integriert ist und zur Drehzahlregelung der Haspel ein Stromregelventil genutzt wird. Das Stromregelventil ist in dem besagten Hydraulikkreis unmittelbar zwischen Motor und Pumpe positioniert, sodass Regeldruckdifferenzen zur Einstellung einer bestimmten Haspeldrehzahl sogenannte Verlustleistungen generieren.

Es ist deshalb Aufgabe der Erfindung die beschriebenen Nachteile des Standes der Technik zu vermeiden und insbesondere eine hydraulische Haspeldrehzahlregelung vorzuschlagen, die eine verbesserte Effizienz aufweist und die in der Umsetzung dennoch kostengünstig ist.

Diese Aufgabe wird erfindungsgemäß durch die kennzeichnenden Merkmale des Anspruchs 1 gelöst.

Indem dem Getreideschneidwerk, zumindest eine Haspel und einen hydraulischen Haspelantrieb umfassend, ein hydraulischer Haspelantrieb zugeordnet ist, welcher zumindest von einer in einem offenen Hydraulikkreislauf betriebenen Motoreinheit gebildet wird und dem Hydraulikkreislauf zumindest ein Stromregelventil zur Drehzahlregelung der Haspel zugeordnet ist, wobei die Motoreinheit von einer Konstantstrompumpe mit Druckmedium versorgt wird und das Stromregelventil der Motoreinheit in einer Bypass-Schaltung zugeordnet ist, wird sichergestellt, dass ein definierter Teilvolumenstrom direkt in den Tank geleitet werden kann, um die in dem jeweiligen Betriebszustand geforderte Drehzahl der Haspel lastunabhängig einzustellen. Dies hat insbesondere den Vorteil, dass die durch das Stromregelventil bewirkte Regeldruckdifferenz keine oder nahezu keine Verlustleistungen hervorruft.

In einer vorteilhaften Ausgestaltung der Erfindung wird das Druckmedium von der Konstantstrompumpe mittels Reversierventil an die Motoreinheit übertragen, sodass die Haspel ihre Drehrichtung umkehren kann.

Indem der Bypass-Schaltung neben dem Stromregelventil zumindest ein Druckbegrenzungsventil zugeordnet ist wird sichergestellt, dass in an sich bekannter Weise der Hydraulikkreislauf vor Überlastung geschützt wird.

Um sicherzustellen, dass bei wechselnder Belastung der Haspel dennoch ein gleichmäßiger Rundlauf der Haspel, d.h. geringe oder nahezu keine Drehzahlschwankung der Haspel erreicht wird, ist in einer vorteilhaften Weiterbildung der Erfindung vorgesehen, dass dem die Motoreinheit aufnehmenden Hydraulikkreislauf eine Rücklaufleitung zugeordnet ist und die Rücklaufleitung ein Staudruckventil aufnimmt.

Eine konstruktiv einfach ausgeführte Struktur des Staudruckventils ergibt sich dann, wenn das Staudruckventil in einer vorteilhaften Ausgestaltung als federbelastetes Rückschlagventil ausgeführt ist.

Zudem ergibt sich eine energieeffiziente Arbeitseise des Staudruckventils, wenn dieses in einer weiteren vorteilhaften Ausgestaltung der Erfindung sperr- oder entsperrbar ausgebildet ist, sodass es nur bedarfsabhängig genutzt wird.

Eine konstruktive einfache Umsetzung dieser Sperr- und Entsperrfunktion lässt sich dann erreichen, wenn die Sperr-und Entsperrfunktion mittels parallel zum Staudruckventil geschaltetem Absperrventil realisiert wird. Eine besonders einfache Ansteuerung des Staudruckventils ergibt sich in diesem Zusammenhang dann, wenn die Sperr-und Entsperrfunktion stromgeregelt ausgebildet ist und von dem von der Konstantstrompumpe generiert Fluidstrom geschaltet wird.

In einer weiteren vorteilhaften Ausgestaltung der Erfindung kann die Sperr- und Entsperrfunktion des Staudruckventils in das Staudruckventil selbst integriert sein. Dies führt dazu, dass der Bauraumbedarf und damit im günstigsten Fall auch die Kosten für die Umsetzung der Sperr- und Entsperrfunktion sinken. In einer besonders effizienten Weise kann diese Integration der Sperr- und Entsperrfunktion unmittelbar in das Staudruckventil dadurch erreicht werden, dass der Rücklauf des Druckmediums in einer Schaltstellung des Staudruckventils gedrosselt wird.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine Teilansicht eines Mähdreschers mit erfindungsgemäßem als Getreideschneidwerk ausgeführten Vorsatzgerät
- Figur 2: eine erste Ausgestaltungsvariante des erfindungsgemäßen Hydraulikkreislaufs
- Figur 3: eine weiter Ausgestaltungsvariante des erfindungsgemäßen Hydraulikkreislaufs
- Figur 4: eine dritte Ausgestaltungsvariante des erfindungsgemäßen Hydraulikkreislaufs

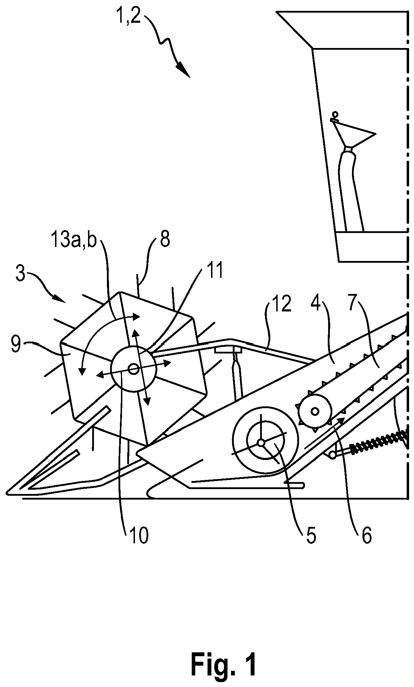

Die in Fig. 1 schematisch dargestellte, als Mähdrescher 1 ausgeführte landwirtschaftliche Arbeitsmaschine 2 nimmt in ihrem frontseitigen Bereich ein erfindungsgemäßes als Getreideschneidwerk ausgeführtes Vorsatzgerät 3 auf, welches in an sich bekannter Weise mit dem Schrägförderer 4 des Mähdreschers 1 verbunden ist. Es liegt im Rahmen der Erfindung, dass das Vorsatzgerät 3 so beschaffen sein kann, dass es zur Ente jeglicher landwirtschaftlicher Produkte und nicht nur für die Ernte von Getreide geeignet ist. Das Querförderorgan 5 des Vorsatzgerätes 3 übergibt das Erntegut 6 an den Schrägförderer 4, wobei dieser das Erntegut 6 mittels umlaufendem Förderer 7 in seinem obenseitigen rückwärtigen Bereich an nachfolgende, hier nicht dargestellte Dreschorgane des Mähdreschers 1 übergibt.

Das Vorsatzgerät 3 nimmt in seinem obenseitigen Bereich in an sich bekannter Weise eine mit Mitnahmezinken 8 versehene Haspel 9 auf. Die Haspel 9 ist in der Regel in horizontale und vertikaler Richtung 10, 11 verschieb- bzw. verschwenkbar bar an Tragarmen 12 gehalten. Zudem ist die Drehrichtung und die Drehzahl 13 der Haspel 9 einstellbar. Im vorliegenden Ausführungsbeispiel ist die Drehzahl 13 der Haspel 9 in erfindungsgemäßer und noch näher zu beschreibender Weise hydraulisch angetrieben, wobei die im Folgenden ausführlich beschriebenen Bestandteile dieser hydraulischen Steuerung entweder unmittelbar in das Getreideschneidwerk 3 und/oder in den Mähdrescher 1 integriert sind.

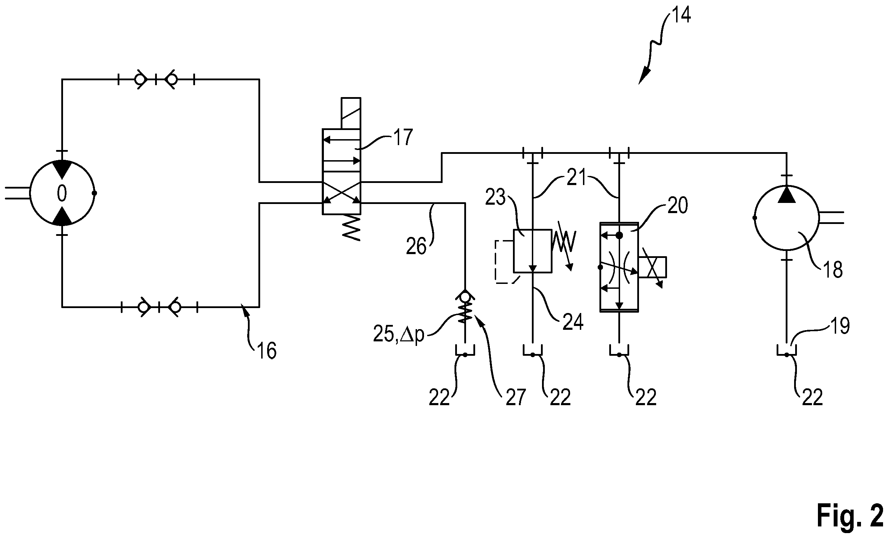

Figur 2 beschreibt nun ein erstes Ausführungsbeispiel des erfindungsgemäßen hydraulischen Haspelantriebs 14. Der Haspelantrieb 14 umfasst eine Motoreinheit 15, die in an sich bekannter, und daher nicht näher dargestellter Weise mit der Haspel 9 mechanisch gekoppelt ist und diese rotatorisch mit der Haspeldrehzahl 13 antreibt. Die Motoreinheit 15 ist in einem offenen Hydraulikkreislauf 16 angeordnet. Die Motoreinheit 15 ist über ein Reversierventil 17 mit der erfindungsgemäßen Konstantstrompumpe 18 verbunden, sodass die Motoreinheit 15 mit einem einen konstanten Druck aufweisenden Druckmedium 19 versorgt wird. Das Reversierventil 17 bewirkt, dass die Motoreinheit 15 und damit die Haspel 9 ihre Drehrichtung 13b ändern kann. Weiter ist dem offenen Hydraulikkreislauf 16 ein Stromregelventil 20 zugeordnet, mittels dessen die Drehzahl der Motoreinheit 15 und damit die Drehzahl 13a der Haspel 9 geregelt werden kann. Erfindungsgemäß ist das Stromregelventil 20 dem offenen Hydraulikkreislauf 15 in einer Bypass-Schaltung 21 in der Weise zugeordnet, dass die Bypass-Leitung 21 den offenen Hydraulikkreislauf 16 über das Stromregelventil 20 mit dem Tank 22 verbindet. Auf diese Weise wird es möglich, dass die Drehzahl 13a der Haspel 9 lastunabhängig einstellbar ist, was letztlich zur Vermeidung, zumindest zur Reduzierung von Leistungsverlusten führt, da Drehzahländerungen 13a nicht mehr gegen den Wiederstand des von den Mitnahmezinken 8 der Haspel 9 bewegten Erntegutes 5 erfolgt.

Weiter umfasst der offene Hydraulikkreislauf 15 zur Vermeidung von Überlastung zumindest ein Druckbegrenzungsventil 23, welches ebenfalls in einer Bypass-Leitung 24 angeordnet ist, welche den offenen Hydraulikkreislauf 16 über das Druckbegrenzungsventil 23 mit dem Tank 22 verbindet.

Weiter umfasst der offene Hydraulikkreislauf 15 ein Staudruckventil 25, welches in erfindungsgemäßer Weise in die Rücklaufleitung 26 des die Motoreinheit 15 aufnehmenden offenen Hydraulikkreislauf 16 integriert ist, wobei die Rücklaufleitung 26 den offenen Hydraulikkreislauf 16 über das Staudruckventil 25 mit dem Tank 22 verbindet. Die Positionierung eines Staudruckventils 25 in der Rücklaufleitung hat insbesondere den Effekt, dass die Motoreinheit 15 durch diesen vom Staudruckventil 25 bewirkten Staudruck Δp vorgespannt wird, was zu einem verbesserten Rundlauf der Haspel 9 bei wechselnden Belastungen führt. In einer einfachen ersten Ausgestaltung nach Figur 2 ist das Staudruckventil 25 als federbelastetes Rückschlagventil 27 ausgeführt.

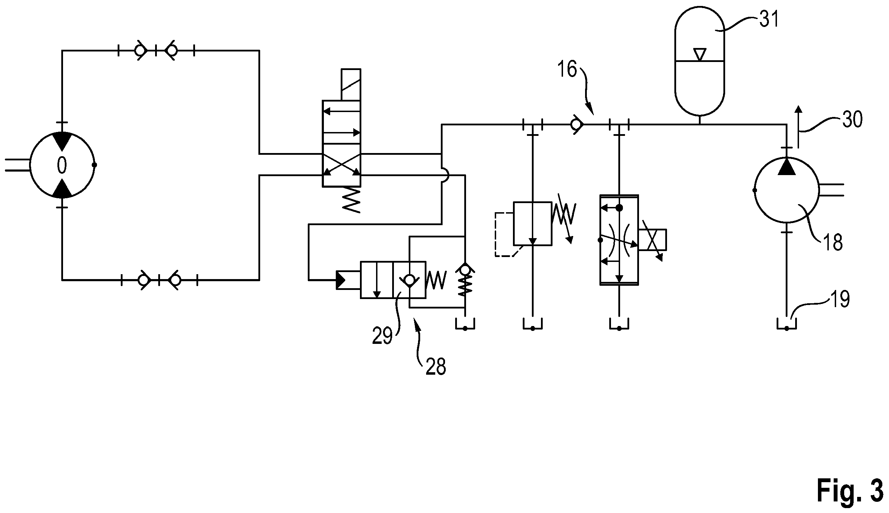

In einer vorteilhaften Ausgestaltung nach Figur 3 ist das Staudruckventil 25 sperr-und entsperrbar ausgeführt, wobei die Sperr-und Entsperrfunktion 28 mittels parallel zum Staudruckventil 25 geschaltetem Absperrventil 29 realisiert wird, wobei Absperrventil 29 stromgeregelt ausgebildet ist und von dem von der Konstantstrompumpe 18 generiert Fluidstrom 30 des Druckmediums 19 geschaltet wird. Die hat insbesondere den Effekt, dass nur bei Bedarf ein Staudruck Δp generiert wird, sodass die Staudruck-bedingten Energieverluste reduzierbar sind. Ferner kann dem offenen Hydraulikkreislauf 16 ein Druckspeicher 31 zugeordnet sein, welcher Druckschwankungen im Druckmedium 19 entgegenwirkt.

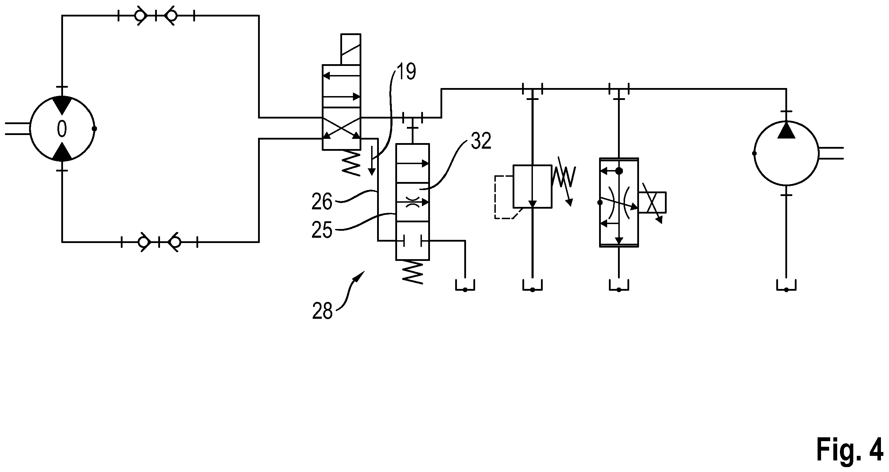

In einer weiteren vorteilhaften Ausgestaltung nach Figur 4 ist die Sperr- und Entsperrfunktion 28 des Staudruckventils 25 in das Staudruckventil 25 selbst integriert, wobei die Integration der Sperr- und Entsperrfunktion 28 in das Staudruckventil 25 derart erfolgt, dass der Rücklauf 26 des Druckmediums 19 in einer Schaltstellung 32 des Staudruckventils 25 gedrosselt wird. Dies führt neben einer weiteren Reduzierung der Staudruck-bedingten Verluste zu einer Verringerung des erforderlichen Bauraums, da hier der Staudruck Δp mittels eines einzigen Ventils, dem Staudruckventils 25 realisiert wird.

**Bezugszeichenliste:**

| | | | |
|---|---|---|---|
| 1 | Mähdrescher | 30 | Fluidstrom |
| 2 | landwirtschaftliche Arbeitsmaschine | 31 | Druckspeicher |
| 3 | Vorsatzgerät | 32 | Schaltstellung |
| 4 | Schrägförderer | | |
| 5 | Querförderorgan | | |
| 6 | Erntegut | Δp | Staudruck |
| 7 | Förderer | | |
| 8 | Mitnahmezinken | | |
| 9 | Haspel | | |
| 10 | horizontale Richtung | | |
| 11 | vertikale Richtung | | |
| 12 | Tragarm | | |
| 13a | Drehzahl Haspel | | |
| 13b | Drehrichtung Haspel | | |
| 14 | Haspelantrieb | | |
| 15 | Motoreinheit | | |
| 16 | offener Hydraulikkreislauf | | |
| 17 | Reversierventil | | |
| 18 | Konstantstrompumpe | | |
| 19 | Druckmedium | | |
| 20 | Stromregelventil | | |
| 21 | Bypass-Schaltung/-Leitung | | |
| 22 | Tank | | |
| 23 | Druckbegrenzungsventil | | |
| 24 | Bypass-Leitung | | |
| 25 | Staudruckventil | | |
| 26 | Rücklaufleitung | | |
| 27 | federbelastetes Rückschlagventil | | |
| 28 | Sperr-/Entsperrfunktion | | |
| 29 | Absperrventil | | |

## Patentansprüche

1. Getreideschneidwerk zumindest eine Haspel und einen hydraulischen Haspelantrieb umfassend, wobei der hydraulische Haspelantrieb zumindest von einer in einem offenen Hydraulikkreislauf betriebenen Motoreinheit gebildet wird und wobei dem Hydraulikkreislauf zumindest ein Stromregelventil zur Drehzahlregelung der Haspel zugeordnet ist,
**dadurch gekennzeichnet,**
**dass** die Motoreinheit (15) von einer Konstantstrompumpe (18) mit Druckmedium (19) versorgt wird und das Stromregelventil (20) der Motoreinheit (15) in einer Bypass-Schaltung (21) zugeordnet ist.

2. Getreideschneidwerk zumindest eine Haspel und einen hydraulischen Haspelantrieb umfassend nach Anspruch 1,
**dadurch gekennzeichnet,**
**dass** das Druckmedium (19) von der Konstantstrompumpe (18) mittels Reversierventil (17) an die Motoreinheit (15) übertragen wird.

3. Getreideschneidwerk zumindest eine Haspel und einen hydraulischen Haspelantrieb umfassend nach einem der Ansprüche 1 oder 2,
**dadurch gekennzeichnet,**
**dass** der Bypass-Schaltung (21) neben dem Stromregelventil (20) zumindest ein Druckbegrenzungsventil (23) zugeordnet ist.

4. Getreideschneidwerk zumindest eine Haspel und einen hydraulischen Haspelantrieb umfassend nach einem der vorhergehenden Ansprüche,
**dadurch gekennzeichnet,**
**dass** dem die Motoreinheit (21) aufnehmenden Hydraulikkreislauf (16) eine Rücklaufleitung (26) zugeordnet ist und die Rücklaufleitung (26) ein Staudruckventil (25) aufnimmt.

5. Getreideschneidwerk zumindest eine Haspel und einen hydraulischen Haspelantrieb umfassend nach Anspruch 4,
**dadurch gekennzeichnet,**
**dass** das Staudruckventil (25) als federbelastetes Rückschlagventil (27) ausgeführt ist.

6. Getreideschneidwerk zumindest eine Haspel und einen hydraulischen Haspelantrieb umfassend nach einem der Ansprüche 4 oder 5,
**dadurch gekennzeichnet,**
**dass** Staudruckventil (25) sperr- oder entsperrbar (28) ausgebildet ist.

7. Getreideschneidwerk zumindest eine Haspel und einen hydraulischen Haspelantrieb umfassend nach Anspruch 6,
**dadurch gekennzeichnet,**
**dass** die Sperr-und Entsperrfunktion (28) mittels parallel zum Staudruckventil (25) geschaltetem Absperrventil (29) realisiert wird.

8. Getreideschneidwerk zumindest eine Haspel und einen hydraulischen Haspelantrieb umfassend nach Anspruch 7,
**dadurch gekennzeichnet,**
**dass** die Sperr-und Entsperrfunktion (28) stromgeregelt ausgebildet ist und von dem von der Konstantstrompumpe (18) generierten Fluidstrom (30) geschaltet wird.

9. Getreideschneidwerk zumindest eine Haspel und einen hydraulischen Haspelantrieb umfassend nach einem der Ansprüche 4 bis 6,
**dadurch gekennzeichnet,**
**dass** das die Sperr- und Entsperrfunktion (28) des Staudruckventils (25) in das Staudruckventil (25) selbst integriert ist.

10. Getreideschneidwerk zumindest eine Haspel und einen hydraulischen Haspelantrieb umfassend nach Anspruch 9,
**dadurch gekennzeichnet,**
**dass** die Integration der Sperr- und Entsperrfunktion (28) in das Staudruckventil (25) derart erfolgt, dass der Rücklauf des Druckmediums (19) in einer Schaltstellung (32) des Staudruckventils (25) gedrosselt wird.
